# EUROPEAN PATENT APPLICATION

(11) **EP 4 659 883 A1**
(43) Date of publication of application: **10.12.2025**
(21) Application number: 25153623.1
(22) Date of filing: 23.01.2025
(51) Int. Cl.: B23B 31/02, B23B 31/20, B23B 31/26, B23B 31/12

(54) **CLAMPING ASSEMBLY**

(30) Priority: 05.06.2024 IT 202400012907
(71) Applicant: Unilock S.r.l., 20090 Trezzano sul Naviglio (MI) (IT)
(72) Inventor: Crosti, Umberto, 20090 Trezzano sul Naviglio MI (IT); Tanzi, Andrea, 20090 Trezzano sul Naviglio MI (IT); Grassi, Valerio, 20090 Trezzano sul Naviglio MI (IT); Crosti, Chiara, 20090 Trezzano sul Naviglio MI (IT)
(74) Representative: Perani & Partners S.p.A.

(57) **Abstract**

The present invention concerns a clamping unit (1) configured to clamp a workpiece (P) around a clamping axis (A-A), comprising:
- a collet holder (2) defining a seat (20) which extends along the clamping axis (A-A) between a front portion (20a) provided with a front opening (20c) and a rear portion (20b),
- a collet (3) slidably mounted in the seat (20) of the collet holder (2), extending between a tail portion (30a) and a head portion (30b), and comprising:
- clamping elements (30) arranged around the clamping axis (A-A) and separated along a circumferential direction (C-C) so as to be mutually movable away from/closer to the clamping axis (A-A) to switch the clamping unit (1) between a clamping and opening configuration,
- elastic elements (33) arranged around the clamping axis (A-A) in interposition between the clamping elements (30) along the circumferential direction,

- a pusher (5) slidably mounted in the seat (20) along the clamping axis (A-A) and configured to push the collet (3) towards the front opening (20c) of the seat (20) and switch the clamping unit (1) from the opening configuration to the clamping configuration or keep it in the clamping configuration.

A feature of the present invention is that the head portion of the collet (3) has an outer surface (30c) tapered in a convergent manner towards the front opening (20c), and that the front portion (20a) of the seat (20) has an inner surface (20d) also tapered in a convergent manner towards the front opening (20c) which, in use, controls the position of the clamping elements (30) with respect to the clamping axis (A-A) as a function of the position of the collet (3) in the seat (20).

## Description

### Technical Field

The present invention relates to a clamping unit that finds useful application in the field of machine tool equipment, in accordance with the preamble of Claim 1.

In detail, the clamping unit that is the object of the present invention can be installed in machine tools for mechanical machining - such as, for example, lathes (in particular, multi-chuck and single-chuck lathes), milling machines, and machining centres - for clamping a workpiece or a work tool.

### State of the art

In the mechanical machining sector, there has always been a need to clamp the workpiece firmly to ensure high machining precisions.

*"collet chucks"* have long been known in the state of the art, i.e. clamping systems equipped with a chuck having a seat in which a collet with a plurality of clamping elements is slidably housed. Sliding the collet inside the seat causes the clamping elements to move towards/away from each other, thus switching the clamping system between a clamping configuration, in which it clamps the workpiece, and an opening configuration, in which it allows the workpiece to be reloaded.

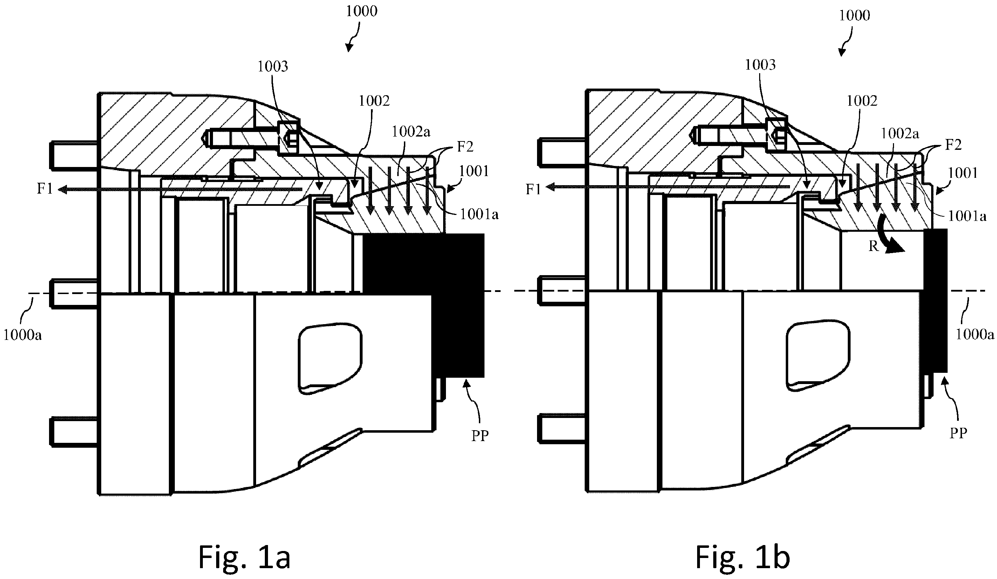

An example of a collet chuck of the known type is shown in the attached figures 1a and 1b. From these it can be seen that the collet 1001 has an outer surface 1001a tapered in a divergent manner outwards (i.e. towards the front opening of the cavity) and that the front portion of the seat 1002 has an inner surface 1002a also tapered in a divergent manner outwards. The inner surface 1002a of the seat 1002 is operatively associated with the outer surface 1001a of the collet 1001 so as to control the positioning of the clamping elements of the collet 1001 away from/closer to the clamping axis 1000a of the chuck as a function of the position of the collet 1001 in the seat 1002.

In use, to switch the clamping unit from the opening configuration to the clamping configuration, the collet 1001 is pulled towards the rear portion of the seat 1002 by a special tie rod 1003 controlled by the machine tool and fixed to a tail portion of the collet 1001 (see arrows F1 in figures 1a and 1b). In doing so, the inner surface 1002a of the front portion of the seat 1002 controls the clamping elements of the collet 1001 to approach the clamping axis 1002a to bring the clamping unit 1000 into the clamping configuration (see arrows F2 in figures 1a and 1b).

Such clamping units are not, however, exempt from drawbacks in that, although they are able to clamp pieces with significant longitudinal extensions firmly (figure 1a), they are not able to clamp pieces with contained longitudinal extensions equally firmly, such as, for example, washers (figure 1b). In this regard, with reference to figure 1b, it should be noted that in gripping pieces of contained extensions this will be entirely arranged outside the seat and, in particular, outside the projection of the inner surface 1002a of the front portion of the seat 1002a on the clamping axis 1000a. This causes the forces responsible for bringing the clamping elements of the collet 1001 closer to the clamping axis 1000a when the tie rod 1003 is actuated (arrows F2) to have an arm with respect to the piece to be clamped PP along the clamping axis 1000a which induces a rotation of the clamping elements 1001a of the collet 1001 (arrow R in figure 1b) which, in turn, causes the piece to be clamped PP to be ejected.

It is therefore evident that the known chucks do not make it possible to firmly grip the pieces to be clamped regardless of their dimensions, in particular longitudinal extensions.

### Object of the invention

In this context, the technical task underlying the present invention is to propose a clamping unit for machine tools which obviates the drawbacks in the prior art as described above.

In particular, an object of the present invention is to make available a clamping unit for machine tools capable of firmly clamping a piece to be clamped, be it a workpiece or a tool of a machine tool, regardless of its dimensions. In other words, it is an object of the present invention to make available a clamping unit capable of firmly gripping both pieces with significant longitudinal extensions (e.g. bars or tool shafts) and with reduced longitudinal extensions (e.g. washers).

### SUMMARY OF THE INVENTION

According to the present invention, the indicated technical task and the specified purposes are achieved by a clamping unit for a machine tool according to one or more of the features of the claims below.

In particular, the present invention proposes to make available a clamping unit wherein the head portion of the collet defines an outer surface tapered in a convergent manner towards the front opening of the collet holder seat, and wherein the front portion of the collet holder seat has an inner surface also tapered in a convergent manner towards the front opening. The inner surface of the front portion of the seat is operatively associated with the outer surface of the collet so as to control the position of the clamping elements of the collet with respect to the clamping axis as a function of the position of the collet in the seat, in particular to control the approach of the clamping elements to the clamping axis to the approach of the collet to the front opening.

The clamping unit also comprises a pusher configured to act on the collet to push it towards the front opening of the seat and thus switch the clamping unit from the opening configuration, in which it allows the insertion/extraction of the piece to be clamped in the clamping unit, to the clamping configuration, in which it clamps the workpiece around the clamping axis.

Such a clamping unit makes it possible to ensure that in the clamping configuration at least part of the workpiece is arranged in the cavity of the collet holder, i.e. that the piece to be clamped falls at least partly into the projection of the inner surface of the front portion of the seat of the collet holder on the clamping axis. In doing so, the portion of the workpiece arranged internally to the collet holder cavity inhibits rotation of the collet clamping elements which, as discussed above with reference to figure 1b, would cause ejection of the piece to be clamped.

It is therefore evident that the clamping unit that is the object of the present invention allows the workpiece to be clamped firmly regardless of its dimensions, in particular its longitudinal extension. In other words, the clamping unit that is the object of the present invention makes it possible to firmly grip both pieces with significant longitudinal extensions (e.g. bars or tool shanks) and with reduced longitudinal extensions (e.g. washers).

### LIST OF FIGURES

Additional features and advantages of the present invention will emerge more clearly from the approximate and thus non-limiting description of a preferred but not exclusive embodiment of a clamping unit for machine tools as illustrated in the appended drawings, in which:
- Figures 1a and 1b show partially sectional side views of a collet chuck for machine tools according to the state of the art while gripping workpieces with different longitudinal extensions,
- Figure 2 shows a front view of a clamping unit for machine tools according to the present invention,
- Figure 3a shows a sectional view of the clamping unit of Figure 2 taken along the section line X-X,
- Figure 3b shows an enlargement of a detail of Figure 3a,
- Figure 4a shows a sectional view of the clamping unit of Figure 2 taken along the section line X-X while clamping a first workpiece,
- Figure 4b shows a sectional view of the clamping unit of Figure 2 taken along the section line X-X while clamping a second workpiece having a longitudinal extension less than that of the first workpiece,
- Figure 5a shows a sectional view of the clamping unit of Figure 2 along section line X-X comprising a first optional additional component (centring bushing),
- Figure 5b shows an enlargement of a detail of Figure 5a,
- Figure 6a shows a sectional view of the clamping unit of Figure 2 along the section line X-X when this comprises a second optional additional component (clamping bushing),
- Figure 6b shows an enlargement of a detail of Figure 6a,
- Figure 7 shows an exploded perspective view of the clamping unit of Figure 2,
- Figure 8 shows an exploded perspective view of the clamping unit of Figure 5a,
- Figure 9 shows an exploded perspective view of the clamping unit of Figure 6a,
- Figure 10 shows a sectional side view of the clamping unit mounted on a machine tool.

### DETAILED DESCRIPTION

The present description has as its object a clamping unit 1 for a machine tool 100, in particular for a machine tool configured to perform mechanical machining by chip removal such as, for example, lathes (multi-chuck and single-chuck), milling machines and machining centres.

The clamping unit 1 is configured to clamp a component so as to hold it firmly during a machining step. Although in the following reference will be made to workpiece P, it should be specified that the component to be clamped can also be a tool of the machine tool.

In detail, the clamping unit 1 is switchable between: a clamping configuration, in which it engages and retains (i.e. clamps) the workpiece P so as to allow the execution of a mechanical machining (e.g. turning) and an opening configuration, in which it allows the disengagement of the workpiece P to perform necessary extraction/insertion operations between one machining and the next (e.g. reloading of the workpiece or tool change).

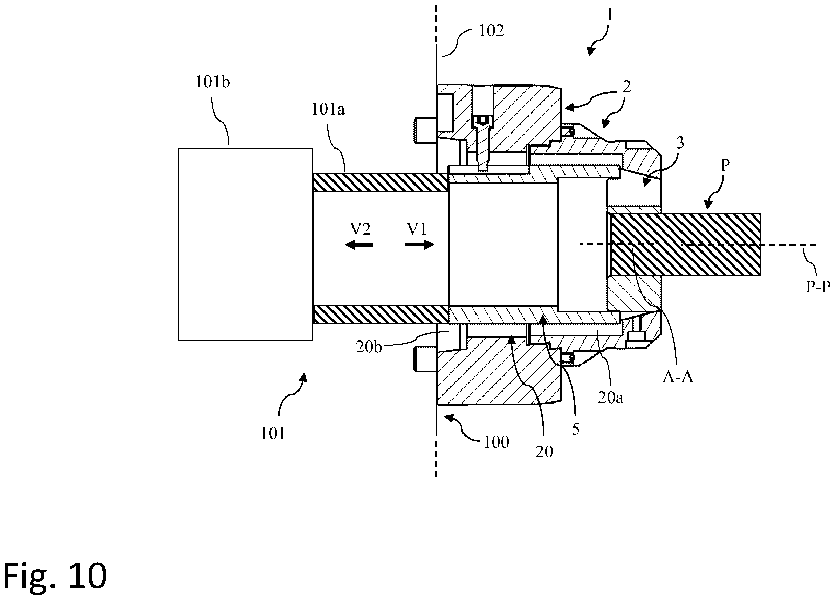

In the clamping configuration the clamping unit 1 is configured to clamp the workpiece P about a clamping axis A-A which, according to an aspect shown in figure 10, is aligned with or parallel to a longitudinal axis P-P of the clamped workpiece P.

In the opening configuration, the clamping unit 1 allows the insertion/extraction of the workpiece P along the clamping axis A-A, preferably through what will hereinafter be defined as the front opening 20c.

According to one aspect, the clamping unit 1 is switched between the clamping and opening configurations by the machine tool 100 on which it is installed. To this end, the machine tool 100 may comprise actuation members 101 configured to be operatively associated with the clamping unit 1 to switch it between the opening and clamping configurations, more specifically at least from the opening to the closing configuration.

In the embodiment of figure 10, the actuation members 101 comprise an actuation element 101a (e.g. tubular body which, preferably, has an axis coincident with the clamping axis A-A) and actuation means 101b (e.g. hydraulic or mechanical) configured to move the actuation element 101a linearly along the clamping axis A-A from and towards the clamping unit 1.

According to one aspect, the actuation means 101b are configured to move the actuation element 101a towards the clamping unit 1 - i.e. in extraction from the body 102 of the machine tool 100 - (arrow V1 in figure 10) to switch the clamping unit 1 from the opening configuration to the clamping configuration.

According to a further aspect, the movement of the actuation element 101a away from the clamping unit 1 - i.e. in insertion in the body 102 of the machine tool 100 - (arrow V2 in figure 10) is associated with the switching of the clamping unit 1 from the clamping configuration to the opening configuration. As will be better explained below, upon retraction of the actuation element 101a, the switch of the clamping unit 1 from the clamping configuration to the opening configuration can be controlled, for example, by the elastic energy accumulated in elastic elements 33 of the collet 3.

It should be specified that, during mechanical machining, the clamping unit 1 can be rotated around the clamping axis A-A or not as appropriate. If the machining involves the rotation of the clamping unit, the machine tool 100 will comprise special kinematic members (not shown in the figures) which, as known, will not be further described.

The clamping unit 1 that is the object of the present description comprises a collet holder 2 defining a seat 20 which extends along the clamping axis A-A between a rear portion 20b and a front portion 20a, opposite to the rear, having a front opening 20c adapted to receive the workpiece P therein.

According to one aspect, the front opening 20c is configured to allow insertion and extraction of the workpiece P parallel, in particular concentrically, to the clamping axis A-A.

In one embodiment, the front opening 20c - and, preferably, also the seat 20 - has the clamping axis A-A for each axis. That is to say that in this embodiment, the clamping axis A-A defines the axis of the front opening 20c and, preferably, also of the seat 20.

In the embodiment shown in the attached figures, the collet holder 2 comprises a base body 2a anchorable to the machine tool 100 and a ring nut 2b removably mountable on the base body 2b - for example, by means of a threaded coupling or any other coupling of the dismountable type - to jointly define the seat 20 therein.

According to one aspect, the ring nut 2b and the base body 2a respectively define at least part of the front portion 20a and of the rear portion 20b of the seat 20. In particular, the ring nut 2b preferably defines the front opening 20c.

With reference to figure 10, the rear portion 20b of the seat 20 is preferably configured to receive and slide therein the actuation members 101 and, in particular, at least part of the actuation member 101a when it is in the extracted position to bring or maintain the clamping unit 1 in the clamping configuration.

According to one aspect, the workpiece P is fed to the clamping unit 1 from the rear portion 20b of the seat 20 towards the front portion 20a, preferably concentrically or parallel to the clamping axis A-A. To this end, the actuation element 101a can for example have a tubular conformation through which the workpiece P (e.g. bars) can be fed. The feeding operation can be automated by means of known common automatic loading systems referred to as *"bar feeders".*

Typically the workpieces P fed to the clamping unit 1 from the rear portion 20b of the seat 20 are bars. Otherwise, if the workpiece P is a piece of bar or a piece with a contained longitudinal extension, it is preferably fed by the front portion 20a of the seat 20, in particular through the front opening 20c.

The clamping unit 1 also comprises a collet 3 configured to clamp and retain the workpiece P therein when the clamping unit is in a closed configuration.

This collet 3 is slidably mounted in the seat 20, according to an aspect in its front portion 20a, along the clamping axis A-A. That is to say that the collet 3 is housed in the seat 20 so as to be able to move relative to the collet holder 2 along the clamping axis A-A, or rather along the direction defined by the latter.

The collet 3 extends between a tail portion 30a facing the rear portion 20b of the seat 20 and a head portion 30b, opposite the tail portion 30a along the clamping axis A-A, operatively associated with the front portion 20a of the seat 20.

In detail, according to one aspect, when the clamping unit 1 is in the clamping configuration the collet 3 is totally arranged internally to the seat 20.

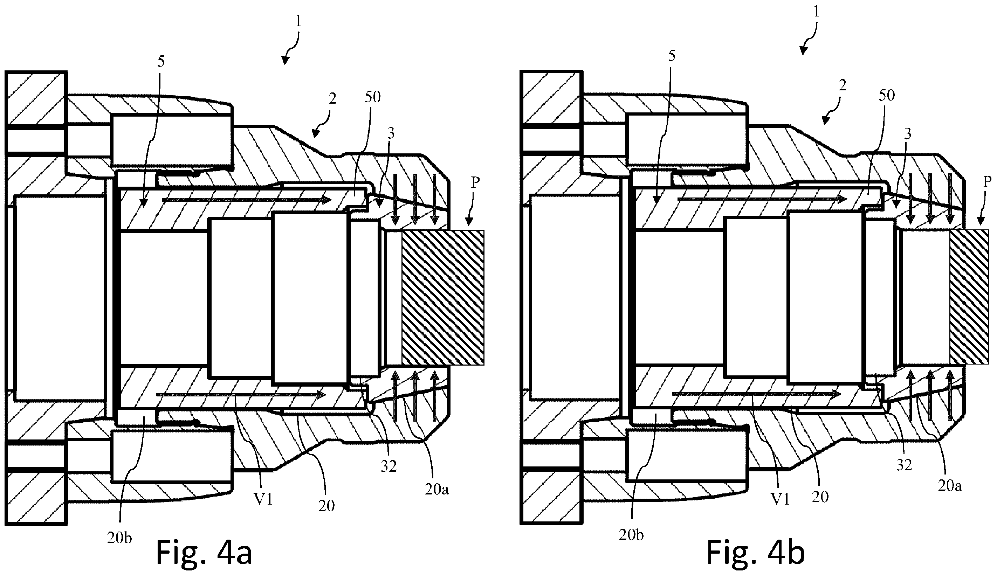

In greater detail, preferably, when the clamping unit is in the clamping configuration the head portion 30b of the collet 3 is arranged internally to the front portion 20a of the seat 20 along the clamping axis A-A. In other words, preferably, when the clamping unit 1 is in the clamping configuration the head portion 30b of the collet 3 does not project from the front opening 20c outside the seat 20 but, at the limit, the head portion 30b of the collet 3 is flush with the front opening 20c as shown in figures 4a and 4b. Advantageously, this allows the clamping stability to be improved.

The collet 3 comprises a plurality of clamping elements 30 arranged around the clamping axis A-A along a circumferential direction C-C.

The clamping elements 30 extend from the head portion 30b to the tail portion 30a of the collet 3, that is, over the entire length of the collet 3 along the clamping axis A-A, and are separated along the circumferential direction C-C. That is, the clamping elements 30 are distinct bodies arranged along the circumferential direction C-C.

According to one aspect the clamping elements 30 are spaced apart in the circumferential direction C-C from the head portion 30b to the tail portion 30a of the collet 3, i.e. the clamping elements 30 are spaced apart in the circumferential direction C-C over their entire extension in the direction defined by the clamping axis A-A.

The clamping elements 30 are mutually movable closer to and away from the clamping axis A-A - and, therefore, also mutually along the circumferential direction C-C - to engage/disengage the workpiece P between them arranged along the clamping axis A-A. That is to say, the clamping elements 30 are mutually movable away from/closer to the clamping axis A-A to switch the clamping unit 1 between the clamping and the opening configuration.

It should be specified that, in order to switch the clamping unit 1 between the clamping and the opening configuration, the clamping elements 30 are configured to move with translational motion, according to a purely translational aspect, along respective radial directions R-R to the clamping axis A-A. It should be noted that this translational motion allows the clamping elements 30 to move closer to the clamping axis A-A remaining substantially parallel to the latter, so as to uniformly clamp the workpiece P along the direction defined by the clamping axis A-A. It should be noted that this result would not be obtainable if the clamping elements were constrained to each other by a collar in their rear portion since, in this case, due to the constraint imposed by such a collar, the clamping elements would perform a rotary motion by closing the workpiece more in their front portion.

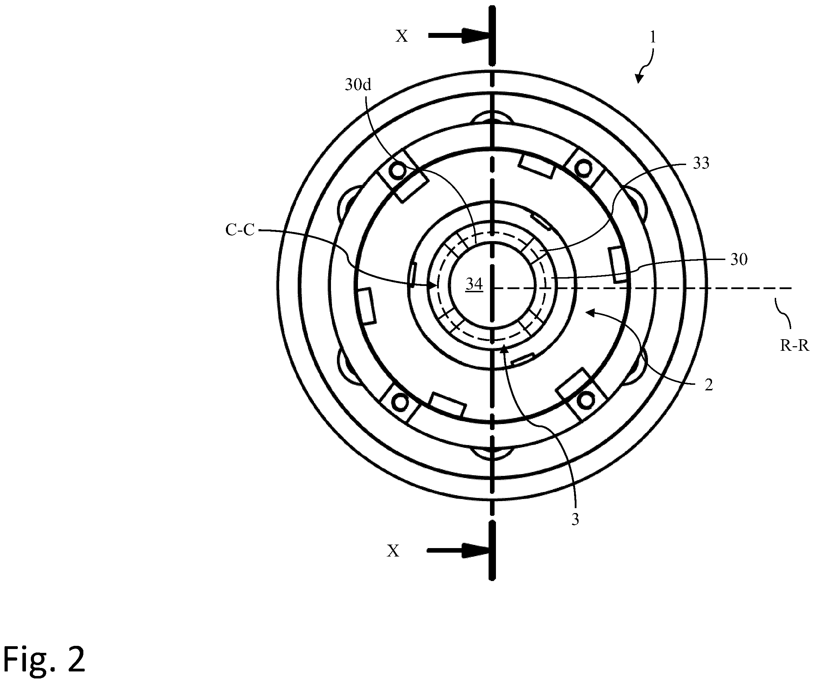

With reference to an aspect shown in figure 2, the clamping elements 30 define therein a clamping cavity 34 in which the workpiece P is available and whose size depends on their mutual distance, in particular their distance from the clamping axis A-A along the respective radial directions R-R. The clamping elements 30 by moving towards/away from the clamping axis A-A contract/expand the cavity 34 switching the clamping unit between the clamping and opening configurations.

In the embodiment of figure 2, the cavity 34 has a cylindrical conformation, however, depending on the conformation of the clamping elements 30, it can also assume different geometric conformations such as, for example, hexagonal, square, or various outlines.

According to an aspect shown in figure 2, the clamping elements 30 extend along the circumferential direction C-C sweeping a circumferential arc.

The collet 3 also comprises elastic elements 33 arranged around the clamping axis A-A in interposition between the clamping elements 30 along the circumferential direction C-C.

According to one embodiment, each elastic element 33 is arranged in a gap that is formed between two respective clamping elements 30 along the circumferential direction C-C. In other words, preferably, the elastic elements 33 connect the clamping elements 30 along the circumferential direction C-C.

The elastic elements 33, deforming elastically, allow the reciprocal movement of the clamping elements 30 both along the circumferential direction C-C and closer to/away from the clamping axis A-A along the respective radial directions R-R.

In detail, the elastic elements 33 are configured to be elastically loaded when the clamping unit 1 is brought from the opening configuration to the clamping configuration. Furthermore, the elastic elements 33 are configured to exert an elastic return force adapted to mutually move the clamping elements 30 away from each other along the circumferential direction C-C and from the clamping axis A-A to switch the clamping unit 1 from the clamping configuration to the opening configuration. Therefore, according to one aspect, the elastic elements 33 are responsible for opening the collet once the action that keeps the collet 3 clamped (e.g. thrust of the pusher element described below) ceases.

According to one aspect, the elastic elements 33 are made of elastomeric material such as, for example, rubber.

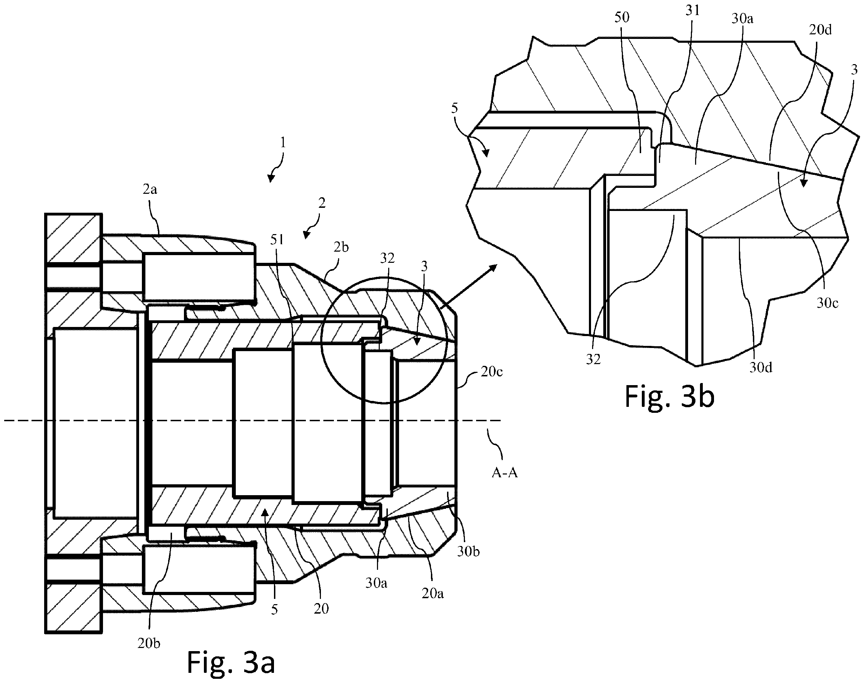

In the embodiment shown in figure 3a and detailed in the enlargement of figure 3b, the head portion 30b of the collet 3 is operatively associated with the front portion 20a of the seat 20 through a connection tapered in a convergent manner towards the front opening 20a. This tapered connection causes, upon movement of the collet 3 towards the front opening 20a, the clamping elements 30 to approach the clamping axis A-A switching the clamping unit 1 from the opening configuration to the clamped configuration. In other words, this tapered connection converging towards the front opening 20a causes the clamping unit 1 to clamp the workpiece P when the collet 3 is pushed towards the front opening 20a along the direction defined by the clamping axis A-A (i.e. from the rear portion 20b to the front portion 20a of the seat 20 of the collet holder 2).

In detail, again with reference to the embodiment shown in figure 3a, the head portion 30b of the collet 3 defines an outer surface 30c which extends around the clamping axis A-A and tapered in a convergent manner towards the front opening 20c. In other words, preferably, the outer surface 30c of the collet 3 is defined by the head portion 30b and is tapered in a convergent manner from the tail portion 30a to the head portion 30b of the collet 3.

Preferably, the outer surface 30c of the collet 3 has a frustoconical conformation that is variable as a function of the position of the clamping elements A-A with respect to the clamping axis A-A (i.e. along the respective radial directions R-R).

According to one aspect, the outer surface 30c is at least in part defined by the clamping elements 30 which, by mutually moving along the circumferential direction C-C and moving closer to/away from the clamping axis A-A, cause its extension to vary, in particular compress/expand it. In this regard, it is specified that the movement of the clamping elements 30 away from the clamping axis A-A along the respective radial directions R-R corresponds to the expansion of the outer surface 30c, conversely the movement of the clamping elements 30 closer to the clamping axis A-A along the respective radial directions R-R corresponds to a contraction of the outer surface 30c. It should be noted that the expansion and contraction of the outer surface 30c of the head portion 30b of the collet 3 corresponds respectively to the expansion and contraction of the clamping cavity 34 and, therefore, the switch of the clamping unit from the clamping configuration to the opening configuration and the switch from the opening configuration to the clamping configuration.

Furthermore, again with reference to the embodiment shown in figure 3a, the front portion 20a of the seat 20 has an inner surface 20d which extends around the clamping axis A-A and is tapered so as to converge towards the front opening 20c.

Preferably, the inner surface 20d of the seat 20 has a frustoconical conformation.

In detail, said inner surface 20d is operatively associated with said outer surface 30c of the head portion 30b of the collet 3 to control the position of the clamping elements 30 with respect to the clamping axis A-A (i.e. along the respective radial directions R-R) as a function of the position of the collet 3 in the seat 20 along the clamping axis A-A. Therefore, the movement of the collet 3 inside the seat 20 along the direction defined by the clamping axis A-A causes the expansion or contraction of the outer surface 30c of the collet and, therefore, the switching of the clamping unit 1 between the clamping and opening configuration.

According to one aspect, said inner surface 20d is defined by the ring nut 2b.

According to a further aspect, the connection tapered in a convergent manner towards the front opening 20c is defined by the inner surface 20d of the front portion 20a of the seat 20 and by the outer surface 30c of the head portion 30b of the collet 3 being operatively associated, in particular in a sliding manner.

In the embodiment shown in figure 3a, the clamping unit 1 also comprises a pusher 5 slidably mounted in the seat 20 along the clamping axis A-A and configured to push the collet 3 towards the front opening 20c of the seat 20 and switch the clamping unit 1 from the opening configuration to the clamping configuration or keep it in the clamping configuration. The pusher 5 is then configured to push the collet 3 from the rear portion 20b to the front portion 20a of the seat 20, i.e. in the direction of the arrow V1 shown in figure 10.

The movement of the pusher 5 can for example be controlled by the actuation members 101. In the embodiment shown in figure 10, the pusher 5 is constrained to the actuation element 101a along the clamping axis A-A, for example, by means of a threaded connection. Preferably, the pusher 5, when engaged with the actuation element 101a is integral with it along the clamping axis in the thrust direction V1 and, more preferably, also in the opposite direction to that of thrust V2.

In alternative embodiments to that shown in figure 10, the actuation element 101a itself can define the pusher 5.

Preferably, the pusher 5 has a push end 50 configured to abut against the tail portion 30a of the collet 3 along the clamping axis A-A to control the position of the collet 3 in the seat 20 along the clamping axis A-A.

More preferably, the push end 50 is configured to control the position of the collet 3 in the seat 20 along the clamping axis only in thrust towards the front opening 20c, i.e. only in the direction indicated by the arrow V1 in figure 10 (not in the opposite direction indicated by the arrow V2 always in figure 10).

In the embodiment shown in figure 3a and detailed in the enlargement of figure 3b, the tail portion 30a of the collet 3 defines an abutment wall 31 which extends in the circumferential direction C-C and transversely, preferably perpendicularly, to the clamping axis A-A. This abutment wall 31 is configured to receive in abutment and strike (i.e. come into contact with) the push end 50 of the pusher 5 parallel to the direction defined to the clamping axis A-A.

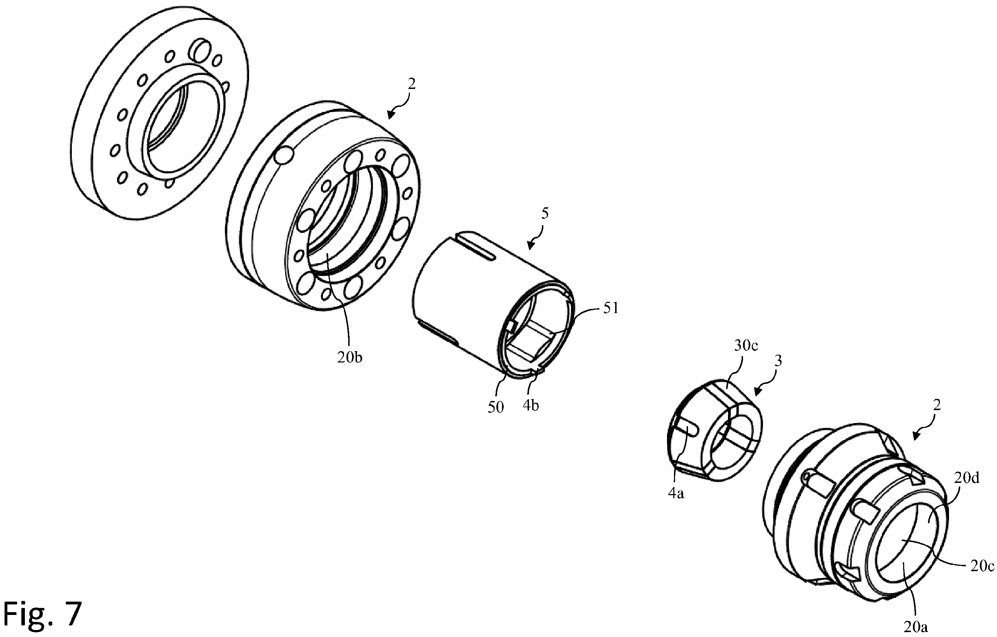

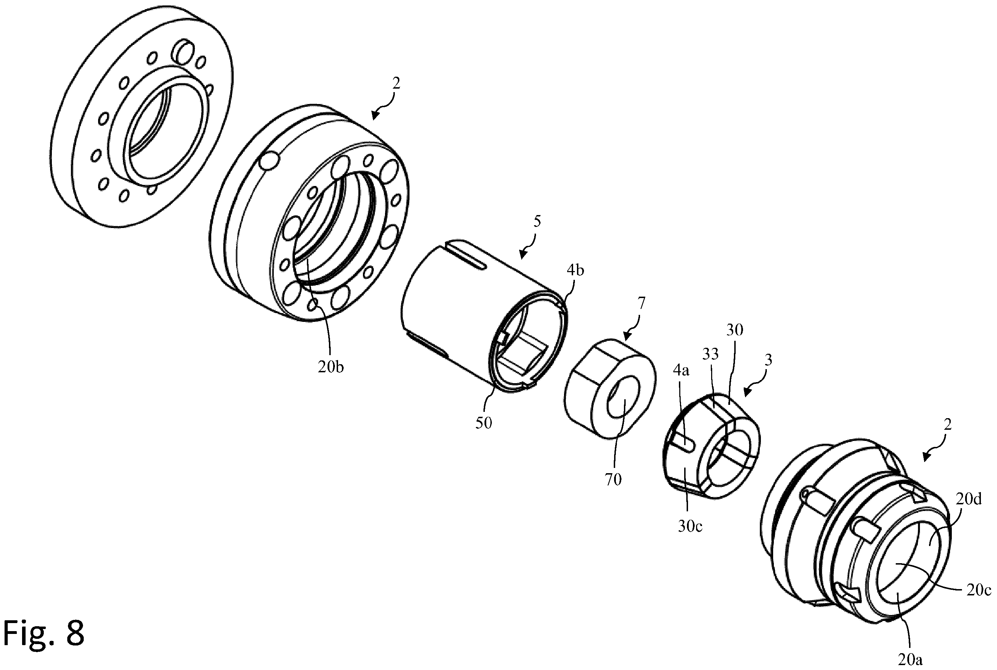

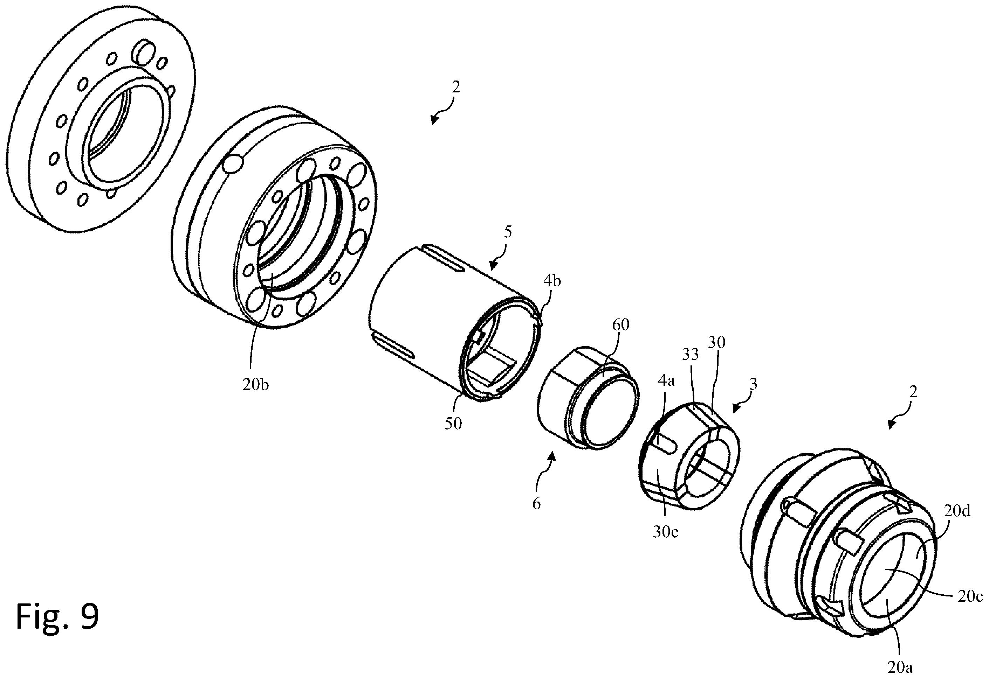

According to an aspect shown in figures 7-9, the tail portion 30a of the collet 3 has first rotation locking members 4a and the pusher 5 comprises second rotation locking members 4b, couplable with the first rotation locking members 4a to block the angular position of the collet 3 with respect to the pusher 5 around the clamping axis A-A. Advantageously, this makes it possible to control the angular position of the workpiece A-A during machining.

The first and second rotation locking members 4a, 4b can for example be complementarily engageable elements which, when engaged, allow the collet 3 to be rotationally constrained to the pusher 5 around the clamping axis A-A. According to one embodiment, the first and second rotation locking members 4a, 4b respectively define a pin and an opening adapted to receive said pin parallel to the clamping axis A-A and retain it transversely to the latter.

The clamping unit 1 may further comprise a clamping bushing 6 configured to allow the clamping unit 1 to be locked in the clamped configuration without the workpiece P being inserted therein.

The clamping bushing 6 can be used to shape, widen, grind or in any other way modify the geometry of the collet 3, preferably its cavity 34, to adapt it to the gripping of specific workpieces P.

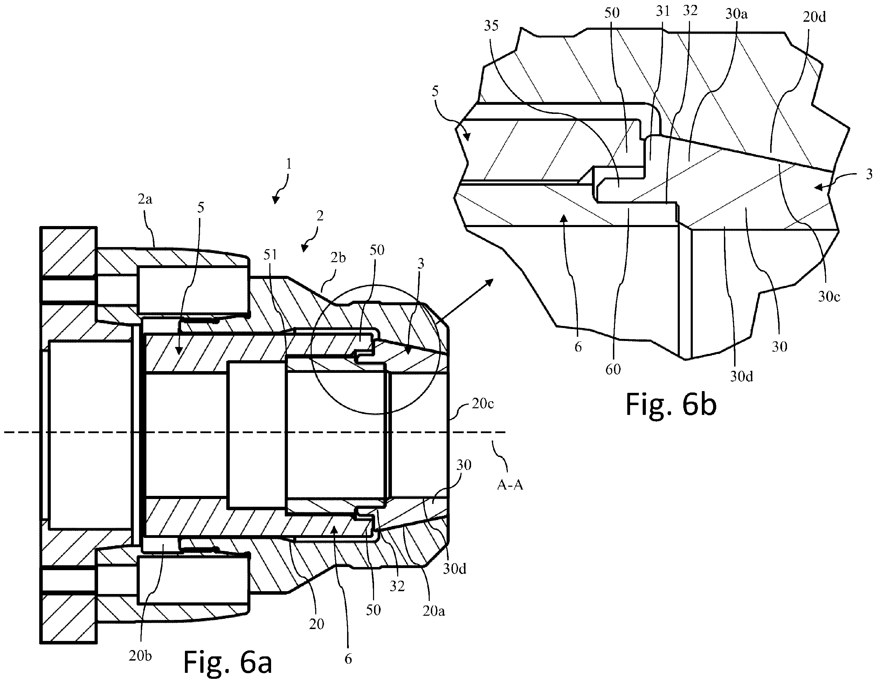

With reference to the embodiment shown in figure 6a and detailed in figure 6b, the clamping bushing 6 is removably insertable in the seat 20 of the collet holder 2 in a position interposed between the collet 3 and the pusher 5 along the clamping axis A-A.

The clamping bushing 6 preferably comprises a locking wall 60 which extends around the clamping axis A-A and is configured to receive in abutment the tail portion 30a of the collet 3 transversely to the clamping axis A-A. **In** doing so the locking wall 60 limits the approach of the clamping elements 30 to the clamping axis A-A when the pusher 5 pushes the collet 3 towards the front portion 20a of the seat 20.

Preferably, at the tail portion 30a of the collet 3, each clamping element 30 comprises a rib 35 projecting parallel to the direction of the clamping axis A-A and configured to strike the locking wall 60 of the clamping bush 6 transversely, in particular radially, to the clamping axis A-A so as to block the approach of the respective clamping element 30 along a direction transverse to the clamping axis A-A.

Said rib 35 may for example extend along the circumferential direction C-C, preferably along an arc of circumference.

The locking wall 60 preferably has an annular conformation so that, when the clamping bushing 30 is housed in the seat 20, the locking wall 60 has the clamping axis A-A per axis.

In the embodiment shown in figure 6b, the collet 3 has a clamping surface 30d which extends around the clamping axis A-A and opposite the outer surface 30c along a direction transverse to the clamping axis A-A (e.g. along the radial direction R-R).

The clamping surface 30d which, according to an aspect shown in figure 1, is jointly defined by the clamping elements 30, is configured to come into direct contact with the workpiece P when the clamping unit is in the clamped configuration. In particular, according to a further aspect shown in figure 1, the clamping surface 30 defines the clamping cavity 34 of the collet 3.

Still with reference to the embodiment shown in figure 6b, in the tail portion 30a the collet 3 has a groove 32 extending around the clamping axis A-A and recessed with respect to the clamping surface 30d, preferably along the radial direction R-R.

Said groove 32 is preferably configured to receive (house) the locking wall 60 and, even more preferably, is made by the aforesaid rib 35.

According to an aspect shown in figure 6b, the groove 32 is recessed with respect to the clamping surface 30d by an amount equal to or greater than the thickness of the locking wall 60. Advantageously, in doing so, the locking wall 60, being flush with the clamping surface 30d or recessed with respect to the latter, does not hinder the machining of the clamping surface 30d during the shaping, widening, grinding operations of the collet 3.

The pusher 5 may comprise a shoulder 51 configured to receive the clamping bushing 6 in abutment along the clamping axis A-A so as to constrain its position with respect to the pusher 5 along the direction defined by the clamping axis A-A. The shoulder 51 allows the bushing to be kept in position during the shaping, widening, grinding of the collet 3 to the advantage of machining precision.

The clamping bushing 6 can also be part of a kit for shaping, widening, grinding the clamps 3 of clamping units 1.

It should be specified that the clamping bushing 6 can be used regardless of the geometric conformation of the front portion 20a of the seat 20 of the collet holder 2 and of the outer surface 30c of the head portion 30b of the collet 3 described above. That is to say that the clamping bushing 6 can also be used in a clamping group in which the head portion 30b of the collet 3 is operatively associated with the front portion 20a of the seat 20 through a tapered connection both in a convergent and divergent manner towards the front opening 20a.

The method for shaping or widening or grinding the collet 3 to prepare it to grip specific pieces to be clamped P provides for the steps of:
A) providing the clamping unit 1 and the machine tool 100 equipped with a working tool (not shown in the figures);
B) mounting the clamping unit 1 on the machine tool 100;
C) providing the clamping bushing 6 and arranging it in the clamping unit 1 between the pusher 5 and the collet 3 along the clamping axis A-A;
D) actuating the pusher 5, preferably by means of actuation members 101 of the machine tool 100, so that the collet 3 is pushed towards the front opening 20c (the position of the clamping elements 30 with respect to the clamping axis A-A is therefore locked according to what is described above);
E) putting the working tool of the machine tool in relative motion with respect to the collet 3 to remove material from the collet 3 and give it a desired geometric conformation.

According to one aspect, in step E) the clamping surface 34 of the collet is machined to give it the desired geometric conformation, e.g. polygonal or to grind it to a specific diameter.

Once step E) has been ended, the clamping bushing 6 is disassembled from the clamping unit 1 so that it no longer limits the approach of the clamping elements 30 to the clamping axis A-A and can, in use, clamp the workpiece P.

The clamping unit 1 that is the object of the present invention may also comprise a centring bushing 7 insertable in the seat 20 of the collet holder 2 in interposition between the collet 3 and the pusher 5 along the clamping axis A-A.

According to one aspect, the centring bushing 7 is arranged in the seat 20 in place of the clamping bushing 6 when the latter has been disassembled at the end of step E).

The centring bushing 7 has a feed channel 70 having the clamping axis A-A as an axis and configured to receive the workpiece P and allow its movement along the clamping axis A-A.

The centring bushing 7 allows the workpiece P to be centred on the clamping axis A-A before the clamping unit 1 moves into the clamping configuration, to the advantage of pressure and ease of clamping.

Preferably, the feed channel 70 has an end 71 facing the rear portion 20b of the seat 20 having a flared geometry so as to facilitate (guide) the insertion of the workpiece P into the feed channel 70.

If the workpiece P has a non-circular conformation and this must be fed to the collet 3 with a particular orientation around the clamping axis A-A, the feed channel 70 has a geometric conformation complementary to that of the workpiece P and the end 71 has chamfers adapted to induce the workpiece P (e.g. bar) to rotate around the clamping axis A-A so that it assumes the correct orientation around the latter. In this embodiment, the centring bushing 7, in addition to the centring function, performs an orientation function of the workpiece P which, in this case, is preferably a bar.

Preferably, the conformation of the feed channel 70 is slightly increased than that of the workpiece P (e.g. bar) so as to leave a gap that facilitates its sliding along the direction defined by the clamping axis A-A.

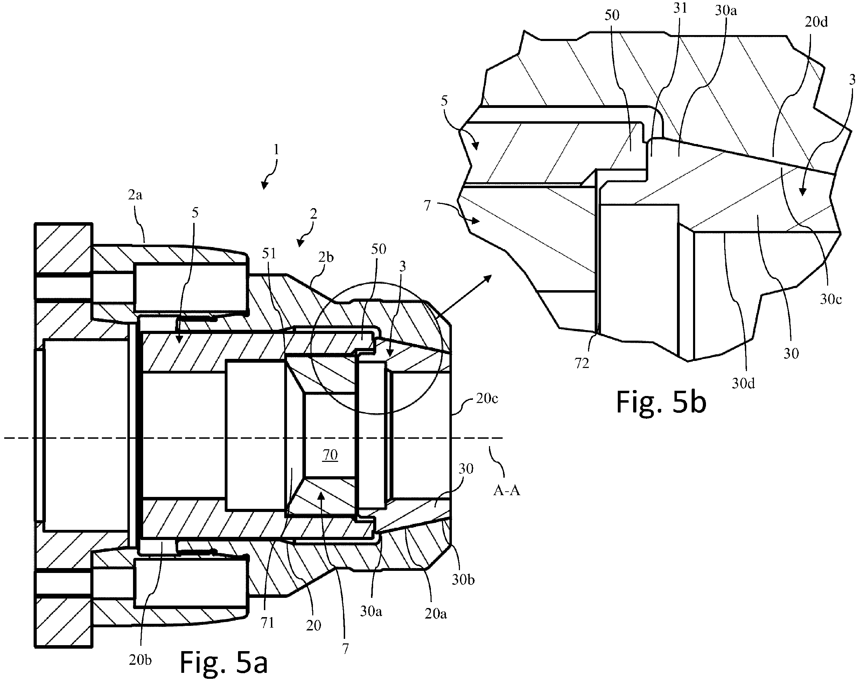

In the embodiment shown in figure 5b, the centring bushing 7 is mounted on the pusher 5 so as to have a mechanical clearance from the tail portion 30a of the collet 3 along the clamping axis A-A when the clamping unit 1 is in the clamping configuration. This makes it possible to avoid the pusher 5 pushing the collet 3 both by acting directly on it and through the centring bushing 7, that is, it makes it possible to avoid double contacts that would affect the accuracy of control of the position of the collet 3 in the seat 30 and therefore the clamping accuracy.

According to one aspect, the clamping unit 1 that is the object of the present description is of the type commonly referred to as a "collet-chuck" in which the collet holder 2 and the collet 3 respectively realize the chuck and the collet of the collet chuck.

It is clear that a person skilled in the art will be able to make numerous equivalent modifications to the variants set forth above, without thereby departing from the scope of protection as defined by the appended claims.

## Claims

1. Clamping unit (1) for a machine tool (100) switchable between a clamping configuration, in which it clamps a workpiece (P) around a clamping axis (A-A), and an opening configuration, in which it allows the insertion/extraction of said workpiece (P), said clamping unit (1) comprising:
- a collet holder (2) defining a seat (20) extending along the clamping axis (A-A) between a rear portion (20b) and a front portion (20a), said front portion (20a) of the seat (20) having a front opening (20c) adapted to receive the workpiece (P),
- a collet (3), slidably mounted in the seat (20) of the collet holder (2) along the clamping axis (A-A), extending between a tail portion (30a) facing the rear portion (20b) of the seat (20) and a head portion (30b) operatively associated with the front portion (20a) of the seat (20), said collet (3) comprising:
- a plurality of clamping elements (30) extending from the tail portion (30a) to the head portion (30b), arranged around the clamping axis (A-A) along a circumferential direction (C-C), and separated along the circumferential direction (C-C) so as to be mutually movable away from/closer to the clamping axis (A-A) to switch the clamping unit (1) between the clamping configuration and the opening configuration,
- a plurality of elastic elements (33) arranged around the clamping axis (A-A) in interposition between the clamping elements (30) along the circumferential direction (C-C), said elastic elements (33) being elastically loaded when the clamping unit (1) is in the clamping configuration and being configured to exert an elastic force adapted to mutually move the clamping elements (30) away from each other along the circumferential direction (C-C) and from the clamping axis (A-A) to switch the clamping unit (1) from the clamping configuration to the opening configuration,
**characterized in that:**
- the head portion (30b) of the collet (3) defines an outer surface (30c) extending around the clamping axis (A-A) and tapered in a convergent manner towards the front opening (20c),
- the front portion (20a) of the seat (20) has an inner surface (20d) extending around the clamping axis (A-A) and tapered in a convergent manner towards the front opening (20c), the inner surface (20d) being operatively associated with said outer surface (30c) to control the position of the clamping elements (30) with respect to the clamping axis (A-A) as a function of the position of the collet (3) in the seat (20) along the clamping axis (A-A),
- a pusher (5) slidably mounted in the seat (20) along the clamping axis (A-A) and configured to push the collet (3) towards the front opening (20c) of the seat (20) and switch the clamping unit (1) from the opening configuration to the clamping configuration or keep it in the clamping configuration.

2. Clamping unit (1) according to claim 1, wherein the pusher (5) has a push end (50) configured to abut against the tail portion (30a) of the collet (3) along the clamping axis (A-A) to control the position of the collet (3) in the seat (20) along the longitudinal direction (A-A) only when pushing toward the front opening (20c).

3. Clamping unit (1) according to claim 2, wherein the tail portion (30a) of the collet (3) defines an abutment wall (31) extending along the circumferential direction (C-C) and perpendicular to the clamping axis (A-A), said abutment wall (31) being configured to receive in abutment the push end (50) of the pusher (5) along the clamping axis (A-A).

4. Clamping unit (1) according to any one of the preceding claims, wherein in the clamping configuration the head portion (30b) of the collet (3) is arranged internally to the front portion (20a) of the seat (20) along the clamping axis (A-A).

5. Clamping unit (1) according to any one of the preceding claims, wherein:
- the inner surface (20d) of the seat (20) has a frustoconical conformation,
- the outer surface (30c) of the collet (3) has a frustoconical conformation that is variable as a function of the position of the clamping elements (30) with respect to the clamping axis (A-A).

6. Clamping unit (1) according to any one of the preceding claims, wherein:
- the tail portion (30a) of the collet (3) has first rotation locking members (4a),
- the pusher (5) comprises second rotation locking members (4b) couplable to the first rotation locking members (4a) to block the angular position of the collet (3) with respect to the pusher (5) around the clamping axis (A-A).

7. Clamping unit (1) according to any one of the preceding claims, comprising a clamping bushing (6) removably insertable in the seat (20) of the collet holder (2) in interposition between the collet (3) and the pusher (5) along the clamping axis (A-A), said clamping bushing (6) having a locking wall (60) extending around the clamping axis (A-A) and configured to receive in abutment the tail portion (30a) of the collet (3) transversely to the clamping axis (A-A) to block the approach of the clamping elements (30) to the clamping axis (A-A) when the pusher (5) pushes the collet (3) towards the front portion (20a) of the seat (20).

8. Clamping unit (1) according to claim 7, wherein the collet (3) has:
- a clamping surface (30d) extending around the clamping axis (A-A), opposite the outer surface (30c), and configured to come into contact with the workpiece (P) when the clamping unit (1) is in the clamped configuration,
- a groove (32) extending around the clamping axis (A-A), recessed with respect to the clamping surface (33d), and arranged in the tail portion (30a) of the collet (3), said groove (32) being configured to receive the locking wall (60) in abutment.

9. Clamping unit (1) according to claim 7 or 8, wherein the pusher (5) comprises a shoulder (51) configured to receive the clamping bushing (6) in abutment along the clamping axis (A-A) and constrain the clamping bushing (6) to the pusher (5) along the clamping axis (A-A).

10. Clamping unit (1) according to any one of the preceding claims, comprising a centring bushing (7) removably insertable in the seat (20) of the collet holder (2) in interposition between the collet (3) and the pusher (5) along the clamping axis (A-A), the centring bushing (7) having a feed channel (70) having the clamping axis (A-A) as an axis and configured to receive the workpiece (P) and allow its movement along the clamping axis (A-A).

11. Clamping unit (1) according to Claim 10, wherein the centring bushing (7) is mounted on the pusher (5) so as to have a clearance from the tail portion (30a) of the collet (3) along the clamping axis (A-A) when the clamping unit (1) is in the clamping configuration.
